# EUROPÄISCHE PATENTSCHRIFT

(11) **EP 0 881 021 B1**
(45) Veröffentlichungstag und Bekanntmachung des Hinweises auf die Patenterteilung: **28.11.2001**
(21) Anmeldenummer: 98108203.5
(22) Anmeldetag: 06.05.1998
(51) Int. Cl.: B23C 5/22, B23C 5/10

(54) **Schaftfräser**
End mill
Fraise à queue

(30) Priorität: 26.05.1997 DE 19721900
(43) Veröffentlichungstag der Anmeldung: 02.12.1998
(73) Patentinhaber: Wilhelm Fette GmbH, 21493 Schwarzenbek (DE)
(72) Erfinder: Rohr, Olaf, 21493 Schwarzenbek (DE)
(74) Vertreter: Patentanwälte Hauck, Graalfs, Wehnert, Döring, Siemons

(56) Entgegenhaltungen:
- US-A- 3 125 799
- US-A- 3 646 650

## Beschreibung

Die Erfindung bezieht sich auf einen Schaftfräser.

Als nächstliegender Stand der Technik ist die US-A- 31 25 799 anzusehen, bei der der Schaft längs geteilt ist. Die Schaft hälften klemmen dabei zwei Schneidplatten.

Fräser sind in zahlreichen Ausführungsformen bekanntgeworden. Sie werden zum Beispiel bei der Herstellung von Gußformen verwendet. Vielfach werden hierbei Schaftfräser eingesetzt, bei denen mindestens eine Schneidplatte, die zumeist Kreiskontur hat, am freien Ende angebracht ist. Es ist auch bekanntgeworden, zwei oder mehr Schneidplatten im Umfangsabstand anzuordnen.

Derartige Schneidplatten werden zumeist mit Hilfe von Spannschrauben am Schaft befestigt. Der Schaft weist einen Plattensitz auf mit einer Gewindebohrung, und die Schneidplatten sind mit einer Durchbohrung versehen für das Hindurchführen einer Spannschraube. Eine derartige Fixierung der Schneidplatten ist an sich zufriedenstellend, stößt jedoch auf Probleme, wenn die Abmessungen der Schneidplatten ein unteres Maß unterschreiten. Der Durchmesser der Durchbohrung wird bei kleiner werdenden Schneidplatten naturgemäß kleiner. Dementsprechend reduzieren sich auch die Abmessungen der Spannschraube. Da die Spannschrauben zumeist einen Innenmehrkant am Kopf aufweisen, erreicht dieser Abmessungen, bei denen es sehr leicht zu einem Überdrehen kommt. Es ist daher schwierig, die Schneidplatten zu lösen oder zufriedenstellend zu befestigen, ohne die Schraube zu beschädigen

Der Erfindung liegt mithin die Aufgabe zugrunde, einen Schaftfräser für zwei Schneidplatten zu schaffen, die wirksam lösbar befestigbar sind, ohne daß Handhabungsschwierigkeiten entstehen.

Diese Aufgabe wird durch die Merkmale des Anspruchs 1 gelöst.

Bei der Erfindung ist eine Klemmplatte vorgesehen, die mittels einer einzigen Klemmschraube gespannt werden kann.

Die Klemmplatte stützt sich mit einem Ende am Schaft ab und weist am anderen Ende zwei Klemmabschnitte auf, von denen einer mit der Vorderseite einer Schneidplatte und der andere mit der Rückseite der anderen Schneidplatte in Eingriff ist. Der Klemmabschnitt der Klemmplatte, der gegen die Rückseite der anderen Schneidplatte anliegt, ist als Sitz für diese Schneidplatte ausgebildet.

Die einzige Klemmschraube befindet sich außerhalb der Kontur der Schneidplatten und kann daher mit einem entsprechenden Durchmesser versehen werden. Es ist daher möglich, mit Hilfe der Klemmplatten beide Schneidplatten wirksam festzulegen. Die ausreichend groß zu dimensionierende Klemmschraube kann daher auch wirksam von einem Werkzeug erfaßt und gelöst bzw. angezogen werden.

Die erfindungsgemäße Befestigung der Schneidplatten ist nicht abhängig davon, daß diese diametral angeordnet sind. Vorzuziehen ist jedoch eine Anordnung der Schneidplatten zumindest parallel zueinander, so daß die Klemmplatte zumindest in zwei parallelen Ebenen mit der jeweils zugekehrten Schneidplatte in Eingriff treten kann.

Es ist bekannt, für die Abfuhr von Spänen Spanmulden vorzusehen. Bei dem erfindungsgemäßen Schaftfräser befindet sich eine im Schaft, beispielsweise an dessen Stirnseite, während eine andere Spanmulde in dem Klemmabschnitt der Klemmplatte ausgebildet ist, die mit der Vorderseite der Schneidplatte zusammenwirkt.

Die Spannschraube hat vorzugsweise einen konischen Kopf, der mit einem konischen Bohrungsabschnitt der Klemmplatte zusammenwirkt. Der Kopf der Klemmschraube hat vorzugsweise einen Innenmehrkant, vorzugsweise einen Innensechskant, um mit einem Werkzeug betätigt zu werden. Vorzugsweise weist der Schaft eine Gewindbohrung auf, mit der die Spannschraube zusammenwirkt. Aus Befestigungsgründen kann die Gewindebohrung einen Versatz zur Paßbohrung in der Klemmplatte aufweisen, von z.B. 0,2 mm. Über den konischen Kopf der Schraube wird die Klemmplatte gegen das eine Ende an den Schaft gedrückt.

Um eine bessere Sicherung zwischen Klemmplatte und Schneidplatten zu erhalten, kann daran gedacht sein, letztere mit einer Mulde zu formen.

Um eine Lageorientierung der Klemmplatte am Schaft zu erhalten, hat diese einen länglichen Vorsprung quer zur Längserstreckung der Platte, die mit einer entsprechenden Ausnehmung des Schafts zusammenwirkt.

Die Erfindung wird nachfolgend anhand von Zeichnungen näher erläutert.
- Fig. 1: zeigt eine Seitenansicht eines Schaftfräsers nach der Erfindung.
- Fig. 2: zeigt einen Schnitt durch die Darstellung nach Fig. 1 entlang der Linie 2-2.
- Fig. 3: zeigt eine Draufsicht auf den Schaftfräser nach Fig. 1.

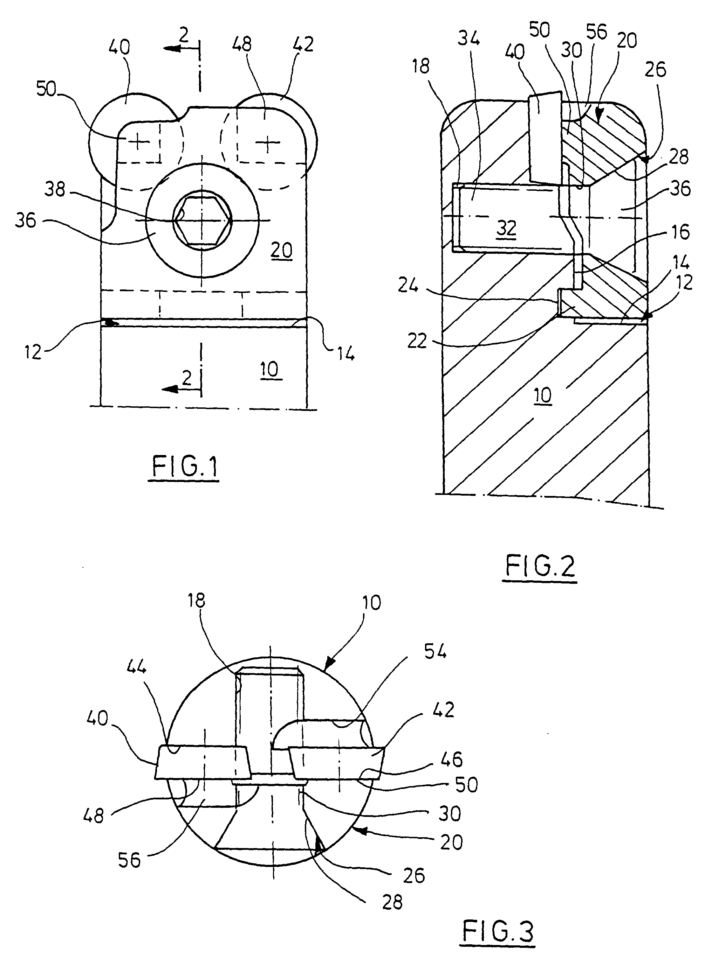

Bevor auf die Zeichnungsbeschreibung eingegangen wird, sei erwähnt, daß die Schnittdarstellung in Fig. 2 relativ zu Fig. 1 um 180° verdreht ist.

In den Figuren ist ein im Querschnitt kreisförmiger Schaft 10 eines Schaftfräsers dargestellt, der am freien Ende eine Ausnehmung 12 aufweist. Die Ausnehmung hat eine erste Fläche 14 quer zur Längsachse des Schaftes 10 und eine zweite Fläche 16, die im wesentlichen parallel zur Längsachse verläuft. In die Fläche 16 ist eine Gewindebohrung 18 eingeformt, deren Achse senkrecht auf der Längsachse des Schaftes steht.

Von der Ausnehmung 12 wird eine Klemmplatte 20 aufgenommen, deren Außenkontur so geformt ist, daß sie die Kontur des Schaftes 10 im Bereich der Ausnehmung ergänzt, d.h. an der Außenseite im wesentlichen kreisbogenförmig ist und nach oben zum freien Ende des Schaftes hin abgerundet, wie insbesondere aus Fig. 2 hervorgeht.

Im in den Figuren 1 und 2 unteren Bereich weist die Klemmplatte 20 eine sich quer erstreckende Leiste 22 auf, die mit einem geringen Spiel in einer entsprechend geformten Ausnehmung 24 in der Fläche 16 einsitzt. Dadurch ist die Klemmplatte in ihrer Lage orientiert gehalten. In dieser Lage ist eine Durchbohrung 26 der Klemmplatte 20 zur Gewindebohrung 18 ausgerichtet bzw. ist ein kleiner Versatz vorgesehen, um eine Vorspannung für die Klemmplatte zu erzeugen. Die Durchbohrung 26 weist einen konischen Abschnitt 28 und einen zylindrischen Abschnitt 30 auf. Die Durchbohrung 26 nimmt eine Klemmschraube 32 auf, deren Schaft 34 in der Gewindebohrung 18 sitzt und deren konischer Kopf 36 mit dem konischen Bohrungsabschnitt 28 zusammenwirkt. Wie aus Fig. 1 hervorgeht, weist der Kopf 36 einen Innensechskant 38 auf.

Zwischen Klemmplatte 20 und dem entsprechenden Abschnitt des Schaftes 10 sind zwei kreisförmige Schneidplatten 40, 42 diametral angeordnet. Ausbildung und Anordnung der Schneidplatten 40, 42 ist konventionell. Wesentlich ist jedoch im vorliegenden Fall, daß im Schaft 10 nur ein Sitz 44 für die Schneidplatte 40 gebildet ist, während ein Sitz 46 in der Klemmplatte 20 geformt ist. Die Klemmplatte 20 liegt mit Klemmabschnitten 48, 50 an den Schneidplatten 40, 42 an, um diese gegen die Gegenabschnitte des Schaftes 10 im Bereich der Fläche 16 anzupressen. Dementsprechend befindet sich eine Spanmulde 54 am freien Ende des Schaftes 10 und eine Spanmulde 56 am freien Ende der Klemmplatte 20. Die Spanmulden 54, 56 sind jeweils nach außen offen, wie sich aus den Figuren ergibt.

Wie erkennbar, wird mit Hilfe der Klemmplatte 20 die Schneidplatte 40 von der Vorderseite und die Schneidplatte 42 von der Rückseite erfaßt, um sie gegen die entsprechenden Abschnitte der Fläche 16 anzupressen und zu halten. Wie sich aus der Zusammenschau der Figuren 1 und 3 ergibt, erstrecken sich die Spanmulden 54, 56 auch achsparallel nach unten, um den Spanabfluß zu verbessern.

Wie ferner erkennbar, wird die Klemmplatte 20 mit Hilfe der einzigen Spannschraube 32 klemmend gegen die Schneidplatten 40, 42 gepreßt. Die Spannschraube 32 befindet sich außerhalb der Außenkontur der Schneidplatten 40, 42 und kann daher mit einem ausreichenden Durchmesser versehen werden bzw. der Kopf kann ausreichend groß gewählt werden, um einen entsprechend dimensionierten Innenmehrkant zu erhalten für einen wirksamen Eingriff eines Werkzeugs. Ein weiterer Vorteil besteht darin, daß für das Lösen bzw. das Festlegen von zwei Schneidplatten nur eine einzige Schraube erforderlich ist, was den zeitlichen Aufwand reduziert.

## Patentansprüche

1. Schaftfräser mit
- zwei Schneidplatten (40, 42), die in Umfangsrichtung versetzt am Schaft angeordnet sind,
- einer Klemmplatte (20), die in einer Ausnehmung (12) des Schaftes (10) angeordnet und mittels einer einzigen Klemmschraube (32) mit einem Ende gegen eine zugeordnete Wand (16) der Ausnehmung (12) und mit dem anderen Ende gegen beide Schneidplatten (40, 42) anpreßbar ist,
- wobei ein Klemmabschnitt (50) der Klemmplatte (20) gegen die Vorderseite einer Schneidplatte (40) und ein anderer Klemmabschnitt (48) gegen die Rückseite der anderen Klemmplatte (42) anliegt und
- wobei der Klemmabschnitt (48) der Klemmplatte (20), der gegen die Rückseite der anderen Schneidplatte (42) anliegt, als Sitz für diese Schneidplatte (42) ausgebildet ist.

2. Schaftfräser nach Anspruch 1, **dadurch gekennzeichnet, daß** die Schneidplatten (40, 42) auf einem Durchmesser des Schaftes (10) oder auf einer Achse parallel zu einem Durchmesser angeordnet sind.

3. Schaftfräser nach Anspruch 1 oder 2, **dadurch gekennzeichnet, daß** die Klemmplatte (20) im Bereich des an der Vorderseite der Schneidplatte (40) anliegenden Klemmabschnitts (50) eine Spanmulde (56) aufweist.

4. Schaftfräser nach einem der Ansprüche 1 bis 3, **dadurch gekennzeichnet, daß** die Klemmschraube (32) einen konischen Kopf (36) aufweist, der mit einem konischen Bohrungsabschnitt (28) der Klemmplatte (20) zusammenwirkt.

5. Schaftfräser nach einem der Ansprüche 1 bis 4, **dadurch gekennzeichnet, daß** der Kopf (36) der Klemmschraube (32) einen Innenmehrkant (38) für ein Spannwerkzeug aufweist.

6. Schaftfräser nach einem der Ansprüche 1 bis 5, **dadurch gekennzeichnet, daß** die Klemmabschnitte (48, 50) der Klemmplatte (20) mit einer Mulde der jeweiligen Schneidplatte zusammenwirken.

7. Schaftfräser nach einem der Ansprüche 1 bis 6, **dadurch gekennzeichnet, daß** die Klemmschraube mit einer Gewindebohrung (18) im Schaft (10) zusammenwirkt.

## Claims

1. An end milling cutter comprising
- two cutting plates (40, 42) fastened on the shank and displaced in circumferential direction
- a clamping plate (20) which is positioned in a recess (12) of the shank (10) and by way of a single clamping screw (32) is pressed with one end against an associated wall (16) of the recess (12) and with the other end against both cutting plates (40, 42), with one clamping section (50) of the clamping plate (20) bearing against the front side of one cutting plate (40) and another clamping section (48) against the rear side of the other cutting plate and
- with the clamping section (48) of the clamping plate (20) which bears against the rear side of the other cutting plate (42) being formed as a seat for this cutting plate (42).

2. An end milling cutter according to claim 1, wherein the cutting plates are arranged on a diameter of the shank or on an axis parallel to a diameter.

3. An end milling cutter according to claims 1 or 2, wherein the clamping plate in the region of the clamping section bearing on the front side of the cutting plate comprises a swarf trough.

4. An end milling cutter according to one of the claims 1 to 3, wherein the clamping screw comprises a conical head which cooperates with a conical bore section of the clamping plate.

5. An end milling cutter according to one of the claims 1 to 4, wherein the head of the clamping screw comprises a polygon socket for a tensioning tool.

6. An end milling cutter according to one of the claims 1 to 5, wherein the clamping sections of the clamping plate cooperate with a trough of the respective cutting plate.

7. An end milling cutter according to one of the claims 1 to 6, wherein the clamping screw cooperates with a threaded bore in the shank.

## Revendications

1. Fraise à queue comportant :
- deux plaques de coupe (40, 42), qui sont disposées sur la queue décalées dans la direction périphérique,
- une plaque de serrage (20), qui est disposée dans un évidement (12) de la queue (10) et peut être serrée au moyen d'une vis de serrage unique (32), par une extrémité contre une paroi associée (16) de l'évidement (12) et par l'autre extrémité contre les deux plaques de coupe (40, 42),
- une partie de serrage (50) de la plaque de serrage (20) portant contre l'avant d'une plaque de coupe (40) et une autre partie de serrage (48) portant contre l'arrière de l'autre plaque de serrage (42) et
- la partie de serrage (48) de la plaque de serrage (20), qui porte contre l'arrière de l'autre plaque de coupe (42), a la forme d'un siège pour cette plaque de coupe.

2. Fraise à queue selon la revendication 1,
**caractérisée en ce que** les plaques de coupe (40, 42) sont disposées sur un diamètre de la queue (10) ou sur un axe parallèle à un diamètre.

3. Fraise à queue selon la revendication 1 ou 2,
**caractérisée en ce que** la plaque de serrage (20) comporte, dans la zone de la partie de serrage (50) adjacente à l'avant de la plaque de coupe (40), une cavité (56) pour les copeaux (56).

4. Fraise à queue selon l'une des revendications 1 à 3, **caractérisée en ce que** la vis de serrage (32) comporte une tête conique (36) qui coopère avec une partie d'alésage conique (28) de la plaque de serrage (20).

5. Fraise à queue selon l'une des revendications 1 à 4, **caractérisée en ce que** la tête (36) de la vis de serrage (32) comporte un creux polygonal (38) pour un outil de serrage.

6. Fraise à queue selon l'une des revendications 1 à 5, **caractérisée en ce que** les parties de serrage (48, 50) de la plaque de serrage (20) coopèrent avec une cavité de la plaque de coupe respective.

7. Fraise à queue selon l'une des revendications 1 à 6, **caractérisée en ce que** la vis de serrage coopère avec un alésage fileté (18) dans la queue (10).
